# EUROPEAN PATENT APPLICATION

(11) **EP 2 296 446 A1**
(43) Date of publication of application: **16.03.2011**
(21) Application number: 10425211.9
(22) Date of filing: 21.06.2010
(51) Int. Cl.: H05B 37/02, H05B 41/282

(54) **Electronic control circuit for fluorescent lighting lamps**

(30) Priority: 22.06.2009 IT VI20090149
(71) Applicant: Beghelli S.p.A., 40050 Monteveglio, Bologna (IT)
(72) Inventor: Beghelli, Gian Pietro, 40050 Monteveglio (BO) (IT)
(74) Representative: Iannone, Carlo Luigi

(57) **Abstract**

An electronic control circuit for fluorescent lighting lamps or tubes (LF), including a striking and control circuit (CP) and a filtering stage (PFC), which is connected with a service power supply (AS), suitable to generate a voltage (V) necessary for operating a microcontroller (M), which manages the measurements of the output power and/or diagnostics of the striking and control circuit (CP); in particular, the microcontroller (M) is programmed to perform several tasks: to check the status of a voltage signal (VN) from the filtering stage (PFC), to measure the values of power and energy absorbed by the circuit, to assess the environmental brightness through at least one sensor (SL), to measure the temperature (T) inside the microcontroller (M), to provide radio-communications, to adjust the power of the aforesaid fluorescent lamps or tubes (LF) on the basis of the environmental light measured and to perform other tasks.

## Description

The present invention relates generally to an electronic control circuit for fluorescent lighting lamps or tubes.

More particularly, the invention relates to an electronic control "ballast" of fluorescent lighting lamps or tubes, intended to be used in lighting systems, both in civil and industrial applications, where it is crucial to achieve energy savings.

The circuit presents a rectangular shape and is inserted into a plastic container, provided with slots for a better heat dissipation.

In particular, the container is formed by two parts made of plastic material, such as a base and a lid, which can be assembled by appropriate joints.

Moreover, the base is advantageously constituted by a U-shaped element, appropriately sized in order to accommodate the printed circuit board and provided at the ends with two slots suitable for fastening.

The upper part is shaped so as to cover the entire circuit, apart from its connectors, and provides the cooling slots and a raiser shape for the insertion of a connector suitable to be connected to a brilliancy sensor.

Finally, the circuit can be installed in ceiling lighting fixtures of various kinds, both rectangular and square, both watertight and open, both metallic and plastic, and the connections are arranged in order to provide, at one side, the power connection and, at the other side, the connection for one or two fluorescent lamps or tubes.

The invention fits in the current debate, according to which the need of building ordinary and/or emergency energy saving lighting systems is increasingly felt. Purpose of the present invention is, in fact, to achieve an electronic control circuit for fluorescent lighting lamps or tubes which allows to get at the output significant values of supplied power, with an equally high energy efficiency.

Other purpose of the present invention is to create an electronic control circuit for fluorescent lighting lamps or tubes which allows radio communication among the lighting system apparatuses and between the lighting apparatuses and the control circuit (ballast) itself.

Another purpose of the present invention is to provide an electronic control circuit for fluorescent lighting lamps or tubes which can be installed in each lighting apparatus and which allows to implement its functionalities also into yet existing systems, without changing the most costly parts thereof.

Further purpose of the invention is to provide an electronic control circuit for fluorescent lighting lamps or tubes which have a significant competitive advantage in terms of simplicity and speed of installation and considerable reduction of installation and operating costs, compared to the traditional constructive solutions.

These and other purposes are achieved by an electronic control circuit for fluorescent lighting lamps or tubes according to claim 1 attached.

Other technical specifications of detail are set forth in the subsequent claims.

Advantageously, the electronic control circuit according to the invention can be used with supply voltages of 230 Volt (with a range from -15% to +10%) at direct current and/or the 230 Volt at alternate current (50-60 Hz) and also tolerates supply voltages of 380 Volt at alternate current.

The output supplied power is equal to 120 Watt, with fluorescent lighting lamp or tubes of 36 Watt and 58 Watt T8 type and of 55 Watt PL type, while the cosϕ (power factor) and the efficiency (η) are greater than 0.9.

The communication among the circuits is of radio type and the circuit can be installed in ceiling lighting fixtures of various types, as well as characteristics, shapes and materials, suitable, in any case, to contain one or two fluorescent lamps or tubes.

Further features and advantages of an electronic control circuit for fluorescent lamps or tubes of lighting apparatus, according to the present invention, will be more apparent from the description that follows, related to an illustrative and preferred, but not limited to, embodiment and the appended drawings, in which:
- figure 1 shows a provisional block diagram of an electronic control circuit for fluorescent lighting lamps or tubes, according to the present invention;
- figure 2 shows a provisional block diagram of a radio transmission module present in the electronic control circuit for fluorescent lighting lamps or tubes, according to the present invention;
- figure 3 shows a logic-circuit block diagram of the microcontroller used in the electronic control circuit for fluorescent lighting lamps or tubes, according to the present invention;
- figures 4, 5, 6, 7, 8 and 9 show a series of provisional block diagrams of implementation of the processes provided by the electronic control circuit for fluorescent lighting lamps or tubes, according to the present invention;
- figure 10 shows a provisional block diagram which represents the memory organization of the microcontroller used in the electronic control circuit for fluorescent lighting lamps or tubes, according to the present invention.

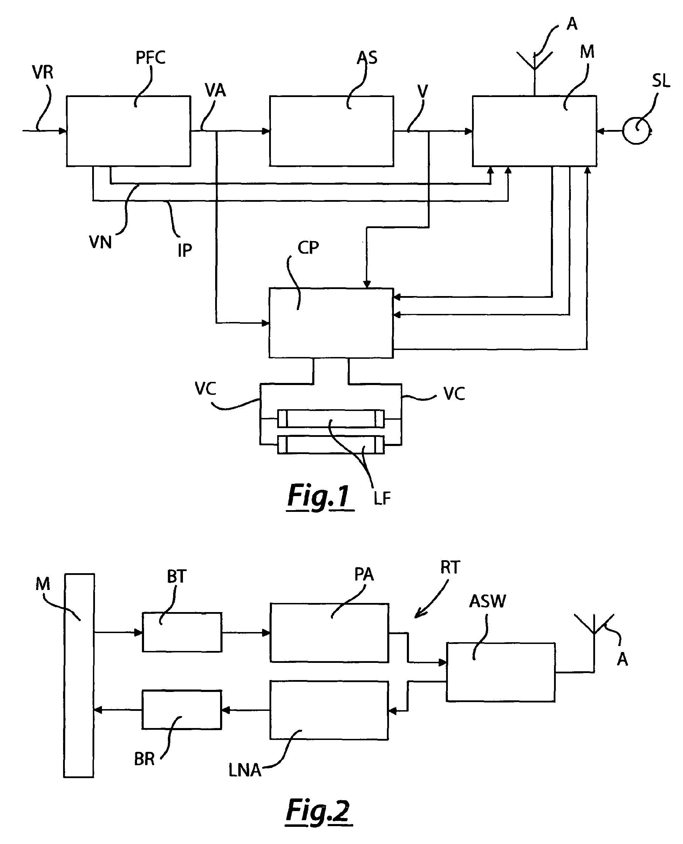

With particular reference to the abovementioned figure 1, the electronic control circuit or "ballast" for fluorescent lighting lamps or tubes, which is the object of the present invention, essentially consists of an electronic filtering stage PFC, at the input of which the voltage VR is applied, which has the task of keeping the power factor high, a service power supply AS, which has the task of generating the service power, a striking or control circuit CP of the fluorescent lighting lamps or tubes LF and a microcontroller M, provided with edge logic, suitable to ensure radio communication, through the antenna A, power measurement, diagnostics of the control circuit CP of the fluorescent lighting lamps or tubes LF too.

The logic of the microcontroller M consists of a software applicative program allowing to check the status of the voltage VN coming out from the filtering stage PFC and evaluate whether lighting on or not the lamps or tubes LF, measure the power and energy absorbed by the circuit, keep updated and store the perpetual time and energy counters, assess the environmental brilliancy, through the light sensor SL, and adjust accordingly the power supplied by the lamps or tubes LF, measure the temperature inside the microcontroller M, provide radio communication for monitoring the operation status and perform diagnostics on the proper functioning of the striking and control circuit CP and fluorescent lamps or tubes LF. Physically, the electronic control circuit is divided into three printed circuit boards, referred to respectively as BARCUN module (which contains the power part of the "ballast"), MODBAN module (a single side BARCUN module, containing three MOS and a diode of power to be dissipated) and RADRUS module (containing the microcontroller M and the circuits related to the radio communication).

The electronic filtering stage PFC has the task of generating a voltage VA equal to 390 Volt at direct current, starting from the input supply voltage VR, which can be both direct and alternate.

The electronic filtering stage PFC consists of a common way input filter and a diodes bridge, connected to a classic configuration circuit, based on the ST L6562 integrated circuit, STB9NK60Z power MOS, RS3J power diode, 0.9 mH EF25H11 transformer and 22 uF and 450 Volt electrolytic capacitor; adjustment of the voltage VA is obtained through a chain of resistors and, in case of need, it is possible to increase the adjusted voltage from 390 Volt to 420 Volt, through a resistor controlled by the RADRUS module.

The current IP coming out from the filtering stage PFC is measured by a series of resistors set in parallel, while the voltage VN coming out from the filtering stage PFC is measured through another chain of resistors set in series; the feedback compensation is obtained through the components of the BARCUN module by inserting a pole into the origin and a zero to improve the circuit response to impulsive load changes.

The service power supply AS has the task of generating the voltage V necessary for the operation of the RADRUS module and integrated circuits L6562 and L6574 and is made of a BUCK type circuit, based on the PowerInt LNK306G integrated circuit, a 1.12 mH inductor and a recirculation diode of the BARCUN module.

The control circuit is connected at the voltage VA and starts as soon as there is voltage VR; the adjustment is accomplished by a resistive divider, a capacitor and a diode, all inserted into the BARCUN module, while another capacitor of the BARCUN module has the task of running the soft-start function.

It is also present an 18 Volt transil (transistor blanker) of the BARCUN module as protection element in case the tension takes values too high for the circuits which must supply.

The striking and control circuit CP of the fluorescent lighting lamps or tubes LF is based on the integrated circuit ST L6574 of the BARCUN module and the lamps or tubes LF are controlled by a classic half-bridge circuit consisting of two STB9NK60ZB MOS of the MODBAN module and a resonant LC circuit of the BARCUN module. The component values change depending on the number and type of the fluorescent lighting lamps or tubes LF to be switched on; when the lighting lamps or tubes LF to be switched on are two, they are placed in parallel and a transformer is used to keep balanced the current which passes through them, indispensable function when the dimmer circuit intervenes in order to reduce brilliancy so as one of the lamps or tubes LF does not switch off.

A capacitor is also provided in series with the resonant circuit, which is responsible for blocking any direct component of the current; a series of resistors are then inserted in parallel to such a capacitor, which are responsible for removing light rings which, sometimes, form in the fluorescent lighting lamps or tubes LF.

L6574 integrated circuit is provided with the following components, suitable to perform the functions required for the proper switching on of the fluorescent lamps or tubes LF:
- a timing section, which allows to determines the pre-heating time and maximum striking time, by means of a capacitor (it is possible to provide a kind of fast switching on function by inserting in series with the aforesaid capacitor a further capacitor, having a lower capacity and usually short-circuited by a MOS of the MODBAN module (regular heating));
- a first control section, which determines the maximum and minimum operating frequencies of the bridge diodes, by means of two resistors and a capacitor (the maximum frequency is that one at which heating of the cathodes takes place and must be greater than the resonant frequency fixed by the circuit LC; the minimum frequency is that one which allows to supply the maximum power wend the fluorescent lamps or tubes LF are switched on);
- a second control section, consisting of an operational amplifier, which allows to intervene on the operation frequency, using a diode, and adjust the supplied power;
- two comparators, which allow to manage, by means of external circuits, any anomalies.

In addition to the aforesaid functions, yet performed by the integrated circuit, more functions have been performed, through the integration of outer circuits, such as, in particular:
- optimization of the cathode heating circuit by type and/or number of lamps or tubes LF to be switched on, operation phase and supplied power (the heating of the cathodes takes place by means of a transformer, whose primary winding is connected with the diode bridge through a capacitor and eventually an inductor or a capacitor, while the secondary windings are connected, through a series of capacitors, with the cathodes and, thus, it is possible to optimize the heating both for the type of lamp or tube LF and the phase of switching on, as well as according to the supplied power by changing

the values of electrical components listed);
- switching off of the circuit due to disconnection of a lamp or tube LF (during the disconnection of a lamp or tube LF, when the ballast is on, an imbalance in the currents which pass across the windings of the transformer creates, with consequent increase of the tension in one of the windings; by means of a resistor and a diode, the comparator 1 of the integrated circuit L6574 is activated, which switch off the diodes bridge and disconnects the output stage);
- vacuum switching on detection, due to an extra striking voltage (during the sequence of striking, the operating frequency changes from a maximum value to a minimum value through the resonant frequency and the voltage reaches very high values, such thousands of Volt; the series consisting of one capacitor and three resistors, along with a diode and a further capacitor properly connected, allows to stop this change in frequency, setting the comparator 1 of the integrated circuit L6574 when the voltage of about 1.000 Volt is reached (voltage which is never reached in presence of fluorescent lamps or tubes LF));
- vacuum switching on detection, due to an extra current in the resonant circuit (during the sequence of striking, the operating frequency changes from a maximum value to a minimum value through the resonant frequency and the current can reach high values, able to saturate the inductor, resulting in the breaking of the output stage; the detection of the current is performed through a resistor and still exploits the comparator 1 of the integrated circuit L6574 in order to stop the striking);
- compensation of adjustment instabilities related to low temperatures at low power (when the fluorescent lamps or tubes LF are placed in environments with temperatures lower than 10°C, it becomes difficult to lower their brilliancy, as the differences become evident and the transformer is not able to balance the currents, leading to instability in the lighting flow ("flikering"); the signal on one of the windings of the transformer tends to increase and the circuit increases the power till to stabilize the currents, preventing the microcontroller M from lowering the brilliancy too much).

Control and radio communication of the whole ballast are entrusted to the 8-bits microcontroller M, in particular consisting of the MC13213 "Freescale-Motorola" chip, composed of a processor (CPU) of the HCS08 family and an 802.15.4 modem, operating at 2.4 GHz (the programming language used for implementation is ANSI-C, within the development system "Metrowerks Code Warrior" licensed by "Freescale-Motorola").

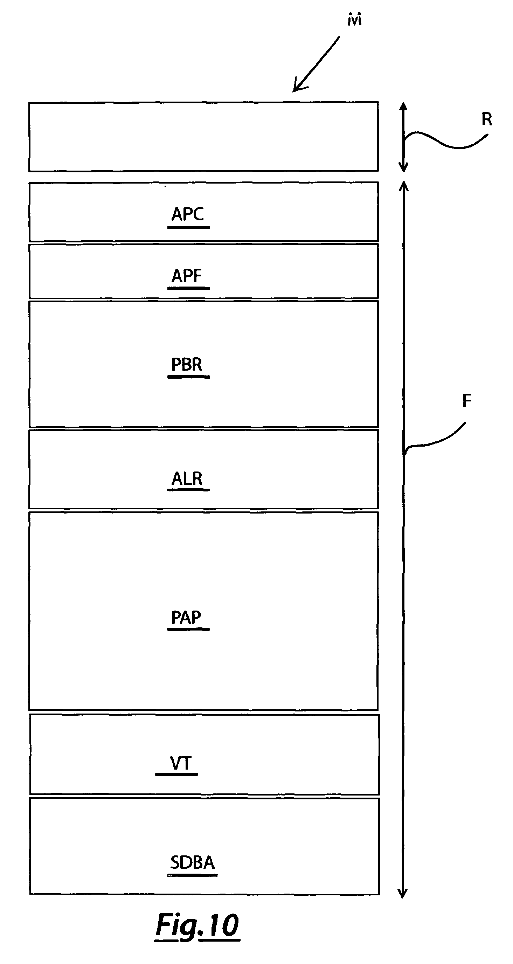

The main features of the processor (CPU) of the microcontroller M are the following:
- integrated flash memory F of 60 KB, as shown in detail in the appended figure 10, divided in an area of circuit parameters APC (offset, calibrations, etc.), area of functional parameters APF (adjustment, automation, etc. parameters), area of "Bootloader" radio program DAB, area of circular update ALR of the perpetual energy and time counters, area of applicative program PAP, area of vector addressing VT and area of start SDBA of the PBR or PAP program;
- integrated RAM memory R of 4 KB;
- low power modes;
- dedicated serial channel for the communication with the integrated modem 802.15.4;
- 16-bits timer with "capture compare" capacity;
- eight channels and 10 bits A/D converter;
- two interfaces of serial communication;
- up to thirty-two inputs/outputs of general use with programmable "pull-up".

The main features of the modem are as follows:
- total compatibility with the IEEE 802.15.4 standard;
- up to sixteen channels of communication;
- programmable output power from -27dBm to +3dBm;
- low power modes;
- four timers available as support for the timers of the processor unit (CPU);
- support for the "packet data mode" and the

"streaming data mode";
- up to seven inputs/outputs of general use and support for those ones of the processor unit (CPU).

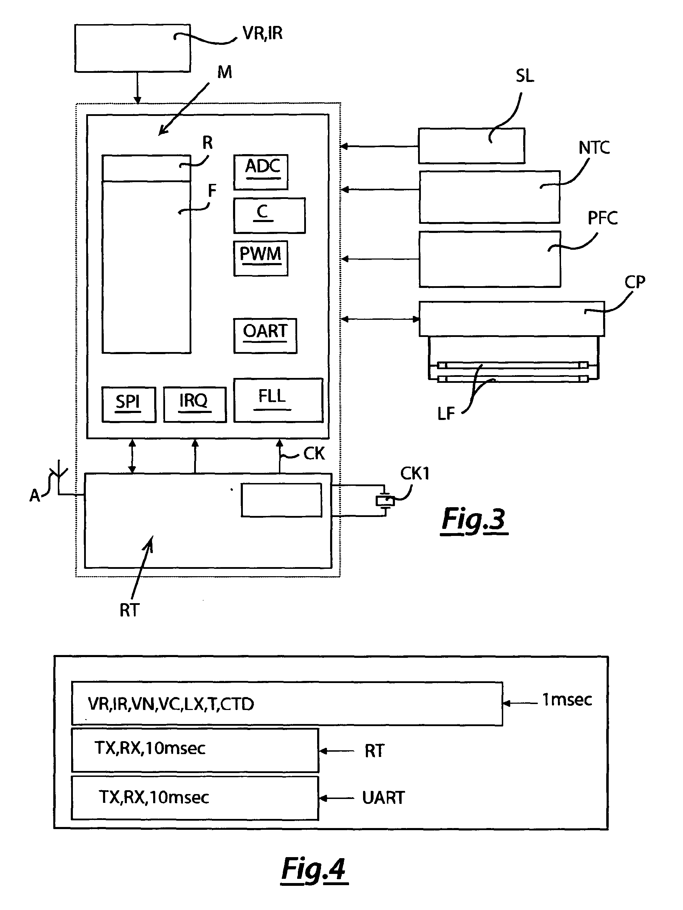

The main functions performed by the microcontroller M through the running of the software applicative program, are the following:
- management of the supplied power (a brilliancy sensor SL is connected with the microcontroller M, providing a signal of the environment brilliancy; this signal, properly amplified by an operational of the RADRUS module, is converted by the processor of the microcontroller M and used to determine the power which the fluorescent tubes LF must supply in order to keep constant the brilliancy, without wasting energy);
- detection of the presence of the fluorescent lamps or tubes LF for switching on, as a result of a replacement of the aforesaid tubes LF (a circuit formed by a series of resistors, diodes and capacitors of the BARCUN module allows the microcontroller M to check whether the fluorescent tubes LF are available to start the switching on sequence);
- measure of the temperature of the ballast circuit (a 10K sensor NTC is provided in the RADRUS module, polarized by a resistor, which allows the microcontroller M to calculate the temperature);
- assessment of the possible breaking of the cathodes (a capacitor is in series with the transformer, which allows to detect the current absorbed by the detection circuit of the cathodes; this signal, properly treated by the circuit, once acquired by the microcontroller M, may be used to perform diagnostics evaluations on the cathodes breaking);
- measure of the current absorbed by the circuit (a resistor allows to detect the current absorbed by the circuit; this signal, properly amplified by an operational of the RADRUS module, is then acquired by the microprocessor M in order to evaluate the current absorbed by the circuit and, therefore, the energy and power absorbed from the network);
- measure of the supply voltage (a circuit consisting of diodes, resistors and capacitors allows the processor of the microcontroller M to evaluate the network voltage and its shape; the evaluation of the network voltage allows to calculate the energy and power consumption from the network, while the evaluation of the shape of the network voltage allows to evaluate the presence of any network distortion, which can be dangerous to the filtering stage PFC);
- 2.4 GHz band radio communication for diagnostics and data collection (the analogical circuit for radio transmission RT is interfaced to the microcontroller M through two balun circuits BT, BR, one transmitting and the other receiving, of the module RADRUS, as shown in detail in figures 2 and 3 attached, considering that the manufacturer provides a set of primitive functions (SMAC) for interface (SPI); in particular, the transmitting balun BT drives a power amplifier PA, while the receiving balun BR is driven by a low noise amplifier LNA and the two amplifiers PA and LNA are connected with a 2.4 GHz "switch" antenna circuit ASW, with which the λ/4 antenna A of the monopole type is connected).

The microcontroller M is programmed so that measure of the network voltage VR and network current IR occurs sampling every millisecond the two reconditioned signals VR, IR, derived from the power supply stage and placed into two 10-bits channels ADC of the processor of the microcontroller M.

The following functional and diagnostic quantities are obtained from the sampling:
- energy (calculated by the microcontroller M, is collected, monitored and displayed on a local or central counter device C and/or a remote supervision centre, such as a data collecting and processing centre);
- instantaneous absorbed power (kept within a min-max values range of a pre-set economic-functional window);
- frequency analysis of the network voltage (in order to distinguish the primary supply (230 volts at alternate current at 50 Hz) from the secondary or emergency one (alternate voltage at 56 Hz or direct current voltage);
- peak voltage analysis for identifying dangerous network supercharge and/or undercharge conditions, arising at the exceeding of the operation thresholds provided (for instance, 230 volts +10% or -15%, as network voltage);
- continuous updating of sampled voltage data, which are placed into a circular "trace-buffer", in order to remotely obtain a function of "oscilloscope" type of the network signal (which can be displayed in real time on a personal computer radio connected with the fluorescent lamps or tubes LF);
- calculation of calibration parameters, through the averages of the values of voltage and current supplied to a test equipment (they are offset and coefficients, which depend on the circuit parameters calculated in the testing process and placed in the proper memory area APC of the microcontroller M).

The measure of the environmental brilliancy occurs by sampling every five milliseconds the sensor signal SL, such as a phototransistor, conditioned by means of an amplification network connected with a 10-bits ADC of the microcontroller M.

This conditioning circuit provides two levels of amplification, to control the microcontroller M, and before every sampling, the microcontroller M changes the amplification level and accumulates the results separately, thus parallelizing the obtained moving averages with the two gains.

These measures are used by the microcontroller M for adjusting, during automatic operation, the lighting flow of each lamp or tube LF, and are also recovered via radio and analyzed by the local or central counter C in order to establish a brilliancy set-point, which must chased by the lamp or tube LF.

The circuit temperature measure occurs by sampling every ten milliseconds the signal of a sensor NTC mounted on the printed circuit board and connected with a 10-bits channel ADC of the microcontroller M.

A moving average is extracted from the measure, which is used by the microcontroller M to inferiorly limit the excursions of the dimmer of the striking and control circuit CP of the fluorescent lamps or tubes LF when, in presence of certain types of lamps or tubes LF, the temperature remains below a certain threshold. The microcontroller M interfaces the striking and control circuit CP of the fluorescent lamps or tubes LF through four signals:
- a ballast output on/off signal ("BallastOn"), connected with a GPIO;
- an output signal PWM of control of the dimmer of striking and control circuit CP ("PWM_Dimmer"), connected with a pin configured as module channel PWM1, at the operating frequency of 1 kHz and duty-cycle step of 1-250 (the current in the fluorescent tube LF, and thus the corresponding lighting flow is controlled by changing the duty-cycle, through the module FLL of the microcontroller M, connected with the clock signal CK, in turn coming from the module FC of the transmitter RT, connected with the clock CK1);
- a diagnostic input signal, related to the cathodes voltage ("V_Cathodes"), connected with a 10-bits ADC of the microcontroller M and monitored at the switching on in order to check the progress of the striking transient state, in order to identify fault conditions in the striking an control circuit CP of the fluorescent tubes LF;
- a diagnostic input signal, related to the presence of the cathodes ("CathodesPresence"), connected with a 10-bits ADC of the microcontroller M and monitored in order to check the presence of the fluorescent lamps or tubes LF, properly or not placed or reinserted into after a replacement (in the latter case, the signal indicates an auto-restart condition to the microcontroller M).

Supply voltage measure of the microcontroller M occurs by sampling every millisecond the voltage VN at the regulator input which powers the microcontroller M itself, connected with its 10-bits ADC channel.

When this signal falls below a certain threshold or remains such for some samples, a "shutdown in progress" of the ballast is decreed; in this condition, the microcontroller M is ready to save the perpetual energy and time counters in a special area of memory dedicated to the "counters Log FIFO", and, at the switching on, the microcontroller M recovers the most recent correct value and reload the respective fields in the two counters of energy and time, which thus resume the computation without loss.

The radio transmitter RT is compatible with the 802.15.4 standard wireless protocol, used, for reasons of computational opportunity, both for reception and transmission according to the "packet" mode, which allows the trans-reception of messages.

There are four pin for the communication SPI among the signals of interface with the microcontroller M; the microcontroller M typically gains access to the status and/or control registers of the transmitter RT, transmission buffers and reception buffers and controls their operation.

Execution of the pending activities is signaled by the transmitter RT through the pin IRQ of the microcontroller M.

Implementation of the "interrupt" processes of the ballast occurs, in particular, as a result of commands given by the microcontroller M in accordance with the parameters coming from the counter or timer C (high priority intervention), depending on the measured values, at each sampling made every millisecond, of the network voltage VR, network current IR, voltage VN entering the microcontroller M, voltage VC present at the cathodes of the fluorescent lamps or tubes LF, produced brilliancy level LX, reached temperature T an presence or not of the cathodes CTD of the fluorescent lamps or tubes LF.

Other "interrupt" processes, as shown in detail in the attached figure 4, occur as a result of commands given by the microcontroller M, in accordance with the parameters coming from the transmitter module and test module UART of the microcontroller M and related to the transmission TX made and reception RX actually occurred, and sampled every ten milliseconds.

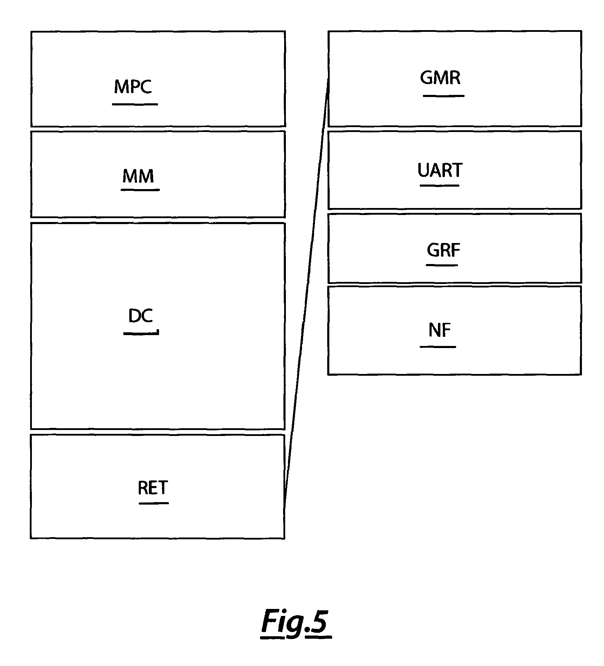

The sequential processes which control the ballast, according to the present invention, are summarized in figure 5 enclosed and include:
- 1) power measure (block MPC), as a result of analyses of the minimum and maximum values of the network voltage VR and its frequency, as well as the normalized power and instantaneous power, and consequent updating of the time and energy counters;
- 2) calculation of the moving averages (block MM) related to temperature T, brilliancy level LX, presence of the cathodes CTD and voltage VC present at the cathodes;
- 3) control of the adjustment (dimmer) of brilliancy (block DC), which is based on the commands of updating of the block PWM of the microcontroller M for feedback, in relation to the measured and ideal parameters or present within a given range of possible values of brilliancy LX, dissipated power and temperature T, control of the switching off of the ballast, in relation to the measured parameters of dissipated power, voltage VC present at the cathodes, network voltage VR (between a minimum and a maximum value), emergency voltage, lack of radio transmission between the transmitter RT and the microcontroller M;
- 4) registration of the energy and time counters (block RET), which takes place instantaneously in the event of interruption of the supply voltage VN to the microcontroller M, periodically, for the back-up, and/or at circular management;
- 5) management of the radio messages (block GMR), which provides the analysis of occurred reception of the message, "processing", booking of a transmission signal replying to the transmitter RT and/or waiting for a booked execution;
- 6) management of accessory serial interface used for example for test functions (block UART), which provides the analysis of the received signal from the transmitter RT, "processing" and sending a transmission reply to the transmitter RT;
- 7) management of the "flash" reprogramming (block GRF), which involves the waiting for the request of reprogramming of a radio transmission, reset of the microprocessor M and restart in "bootloader" mode;
- 8) notification of critical conditions (block NF), which provides the check of new indications of critical states and/or real-time updates, via radio, of the critical states variables.

As illustrated in the block diagrams reported in the appended figures 3, 4 and 5, the algorithm for calculating the energy is distributed in two processes, referred to as "interrupt process" and "passing sequential applicative process".

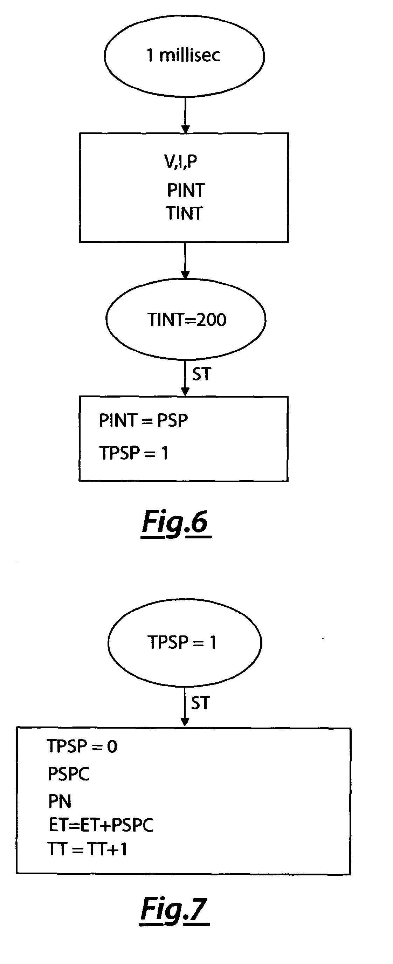

According to the interrupt process, every millisecond the voltage V and current I values are sampled, multiplied by (P = V*I) and stored in a period counter PINT (as shown in detail in the diagram of figure 6 attached).

The period counter PINT and time counter TINT are incremented at each interrupt and, when TINT reaches 200 value (therefore, every two hundreds milliseconds), a prefixed indication is provided for the passing sequential (applicative) process PSP (with the time counter of the passing sequential process TPSP set equal to 1), that will perform the rest of the process. When the condition of TPSP = 1 is detected the passing sequential (applicative) process is run for calculating energy and time and the variable PSP is correct into a variable PSPC, applying a formula whose coefficients are the result of the ballast test and calibration; PSPC correct variable is stored in a circular array FIFO of five elements, whose sum gives the value of instantaneous power PN, and, moreover, the variable PSPC is added to the perpetual energy counter ET and the perpetual time counter TT is incremented (as shown in detail in the diagram of figure 7 attached). Variables PN, ET and TT are available via radio for the central counter C of the microcontroller M.

The adjusting process of the brilliancy (dimmer) is performed in a passing sequential (applicative) process which uses a series of variables consisting of the results of samplings made on the basis of the interrupt process.

In addition, every five milliseconds (then, every five interrupt events N) is sampled the voltage VSL of the sensor or phototransistor SL and updated the gain G of the operational amplifier which affects the signal thereof towards the microcontroller M.

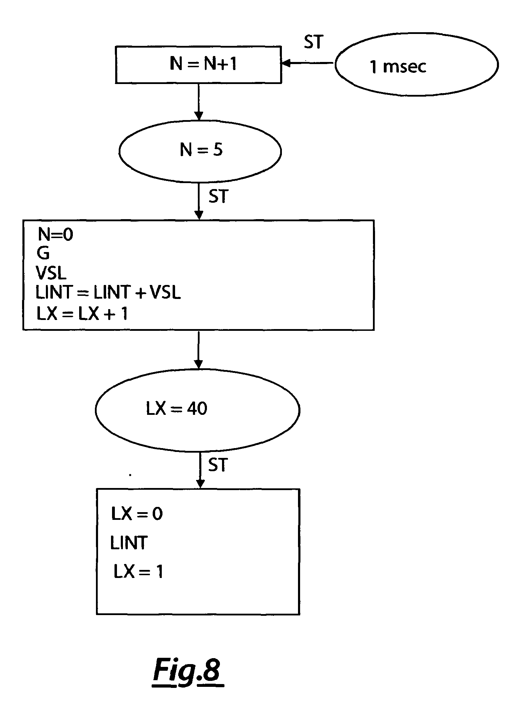

The sampled value of the voltage VSL is stored in a two elements array LINT, corresponding to the performed sampling of the brilliancy level LX, with high or low gain G (High Gain, Low Gain); every forty samples (that is, every two hundreds milliseconds in total), an indication for the passing sequential process (LX = 1) is provided, which performs the rest of the process (as shown in detail in figure 8 enclosed).

Indeed, when the condition LX = 1 is detected the process of calculating average brilliancies, generating the variables LXHM (High Medium brilliancy) and LXLM (Low Medium brilliancy), is run.

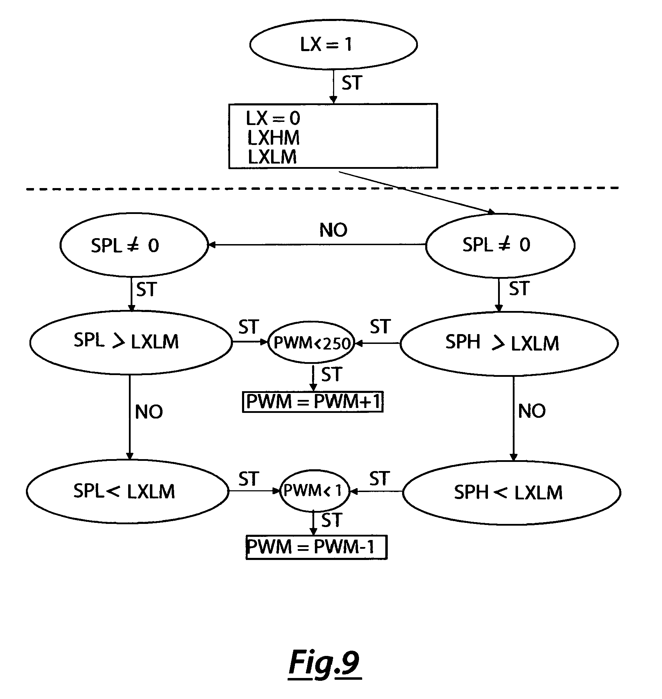

These variables, in turn, are used in the sequential process (applicative) of adjustment of the brilliancy level (dimmer), which, by controlling the lighting flow through the PWM duty-cycle, will try to make equal the value of brilliancy with the pre-set value of high (SPH) or low (SPL) set-point (as shown in detail in the diagram of figure 9 attached).

The variables LXHM and LXLM are, furthermore, available via radio for the central counter C, which uses them to calculate and set on the lamp or tube LF the appropriate high SPH or low SPL set-point.

Finally, if an emergency condition is enabled, it is possible to perform the switching on of the emergency ballast, according to which the microcontroller M, before switching on the fluorescent lamps or tubes LF, performs the recognition and check of the network frequency, by controlling the normal switching on (full power) in case it detects a frequency of a primary network equal to 50 Hz and the emergency switching (low power) in case it detects a frequency (of emergency) of a secondary network equal to 56 Hz at direct current.

The analysis of the supply frequency and subsequent decision to switch on, by the microcontroller M memory, involves the central counter C (which performs squaring of the network voltage sampled every millisecond and determines the number of fronts and stay time), PWM power controller (which performs the analysis of the number of fronts and check of the stay time determines the network frequency) and brilliancy regulator LX (which provides waiting for the recognition of the network frequency by the PWM controller and performs the decision to switch on at full power or not when the network frequency has been recognized).

In case an emergency frequency is detected, the turning on of the fluorescent lamps or tubes LF is affected by the further parameter of the emergency power; in such a case, the lamps or tubes LF can be kept off if the parameter related to the emergency power has the value equal to 0 or on at the power indicated by the aforesaid parameter if the same is different from 0. The characteristics of the electronic control circuit for fluorescent lighting lamps or tubes, which is the object of the present invention, are clear from the description made, as well as the resulting benefits.

It is, finally, clear, that many variations can be made to the electronic control circuit in question, without for this reason going out of the novelty principles inherent to the inventive idea, as it is clear that, in the practical implementation of the invention, materials, shapes and sizes of the details illustrated may be any, according to requirements, and the same may be replaced with others technically equivalent.

## Claims

1. Electronic control circuit for fluorescent lighting lamps or tubes (LF), comprising a striking and control circuit (CP) of the fluorescent lighting lamps or tubes (LF) and a filtering stage (PFC), at the input of which the network voltage is applied (VR) and suitable to keep a high power factor, which is connected with a service power supply (AS), suitable to generate a voltage (V) necessary for operating a microcontroller (M), which manages the measurements of the output power and/or diagnostics of said control circuit (CP) of the fluorescent lighting lamps or tubes (LF), **characterized in that** said microcontroller (M) is programmed in such a way as to check the status of a voltage signal (VN) coming out from said filtering stage (PFC), measure the values of power and energy absorbed by the circuit, keep updated and store respective perpetual time counters (TT) and energy counters (ET), assess the environmental brilliancy through at least one sensor (SL), measure the temperature value inside said microcontroller (M), provide radio-communications for monitoring the operation status of the entire electronic control circuit and perform diagnostics on the operation status of said striking and control circuit (CP) and said fluorescent lamps or tubes (LF).

2. Electronic control circuit as claim 1, **characterized in that** said circuit is divided into several modules, containing, respectively, a power part, a part suitable for the power dissipation and a logic and radiocommunication part.

3. Electronic control circuit as claim 1, **characterized in that** said microcontroller (M) includes a timing section, which allows to determine time intervals of pre-heating and striking of said fluorescent lamps or tubes (LF), a first control section, which determines the operation frequencies of said filtering stage (PFC), a second control section, composed by an operational amplifier, which allows to set a work frequency and adjust the power supplied, and one or more comparators, which allow to manage any anomalies.

4. Electronic control circuit as claim 1, **characterized in that** turning on means of said fluorescent lamps or tubes (LF) operating according to the type of fluorescent lamps or tubes (LF) and on the basis of the power supplied, turning off means of the circuit due to disconnection of at least one fluorescent lamp or tube (LF), detection means for loadless turnings on, compensation means of the adjustment instabilities due to the operating temperature.

5. Electronic control circuit as claim 1, **characterized in that** said microcontroller (M) is formed by a processor, which includes an integrated flash memory (F), divided into an area of circuit parameters (APC), an area of functional parameters (APF), an area of "Bootloader" radio program (PBR), an area of circular update (ALR) of the perpetual energy and time counters, an area of applicative program (PAP), an area of vector addressing (VT) and an area of start (SDBA) of the "Bootloader" and/or applicative programs.

6. Electronic control circuit as claim 1, **characterized in that** at least one brightness sensor (SL) is connected with said microcontroller (M), providing a signal proportional to an environmental brightness level, sampled in prefixed time intervals and used to determine the power which can be supplied by said fluorescent lamps or tubes (LF), in order to keep constant a produced brilliancy level (LX), and/or a presence detector of the fluorescent lamps or tubes (LF) at the moment of their turning on and/or at least one detector of sampled temperature (T) values and/or detection means of the presence of the cathodes (CTD) and/or detection means of network current (IR) and the current absorbed by the circuit and/or measuring means of the voltage (VR) and/or measuring and sampling means of the voltage (VN) present at the input of the microcontroller (M) and/or a radio transmitter (RT) for the transmission (TX) and/or reception (RX) of signals and/or diagnostics and/or data collection communications.

7. Electronic control circuit as claim 6, **characterized in that** said detection means of the current (IR) and said measuring means of the voltage (VR) are suitable to sample, at prefixed time intervals, the current and voltage signals, in order to get values of total energy, dissipated instantaneous power, frequency of the network voltage, peak voltages, sampled voltage data, rating parameters, through the averages of the voltage and current values.

8. Electronic control circuit as claim 1, **characterized in that** said microcontroller (M) is suitable to perform the calculation of moving averages (MM) related to the temperature reached (T), at a brilliancy level (LX) produced by said fluorescent lamps or tubes (LF), at the presence of the cathodes (CTD), at a signal of voltage (VC) present at the cathodes (CTD).

9. Electronic control circuit as claim 1, **characterized in that** said microcontroller (M) is suitable to perform a brilliancy adjustment control (DC) of the fluorescent lamps or tubes (LF), on the basis of feedback controls of a power controller (PWM), in relation to a plurality of measured and/or ideal parameters relating at least to a brilliancy level (LX), dissipated power, temperature (T), voltage (VC) present at the cathodes (CTD), network voltage (VR), an emergency voltage, presence or absence of radio transmission.

10. Electronic control circuit as claim 7, **characterized in that** the energy of the circuit is calculated starting from a sampling process of the values of voltage (V) and current (I), which are multiplied and stored in a period counter (PINT), said period counter (PINT) being increased with a time counter (TINT) up to a reached predetermined value by said time counter (TINT), when a prearranged indication for performing a subsequent sequential process (PSP) is provided.

11. Electronic control circuit as claim 10, **characterized in that** said sequential process (PSP) is performed starting from the results of a testing and calibration operation of the circuit and provides an instantaneous power value (PN) and further variables to be provided to said perpetual energy (ET) and time (TT) counters.

12. Electronic control circuit as claim 10, **characterized in that** said sequential process (PSP) determines the adjustment to a brilliancy level (LX) of said fluorescent lamps or tubes (LF), starting from sampled values of a voltage (VSL) of an environmental brilliancy sensor (SL) and from a calculation of average brightness, which generate respective variables (LXHM, LXLM) suitable to define at least a prefixed ideal brilliancy value (SPH, SPL).

13. Electronic control circuit as claim 1, **characterized in that** said microcontroller (M), before turning on the fluorescent lamps or tubes (LF), performs a review of the network frequency and drives a full power turning on in case it detects a frequency network of 50 Hz or a reduced power turning on in case it detects a network frequency (emergency frequency) of 56 Hz at direct current.

14. Electronic control circuit as claim 13, **characterized by** the fact that, in case an emergency frequency is detected, said fluorescent lamps or tubes (LF) are kept switched off in case a parameter related to the emergency power is null, or switched on at the power indicated by said parameter in case said parameter related to the emergency power is different from zero.
